# FASCICULE DE BREVET EUROPEEN

(11) **EP 2 976 399 B1**
(45) Date de publication et mention de la délivrance du brevet: **04.12.2019**
(21) Numéro de dépôt: 14716889.2
(22) Date de dépôt: 19.03.2014
(51) Int. Cl.: C09D 133/04, C09D 4/00, C09D 135/02, C09D 167/07, C09D 171/02, C08F 220/10, C08F 290/06, C09J 151/08, C08F 222/10

(54) **COMPOSITIONS RETICULABLES A BASE DE COMPOSES DE DERIVES (METH) ACRYLES DE DIANHYDROHEXITOL**
VERNETZBARE ZUSAMMENSETZUNGEN AUF BASIS VON VERBINDUNGEN AUS (METH)ACRYLIERTEN DERIVATEN VON DIANHYDROHEXITOL
CROSS-LINKABLE COMPOSITIONS BASED ON COMPOUNDS OF (METH)ACRYLATED DERIVATIVES OF DIANHYDROHEXITOL

(30) Priorité: 19.03.2013 FR 1352452
(43) Date de publication de la demande: 27.01.2016
(73) Titulaire: Roquette Frères, 62136 Lestrem (FR); Centre National de la Recherche Scientifique (C.N.R.S.), 75794 Paris Cedex 16 (FR); UNIVERSITE DE MONTPELLIER, 34090 Montpellier (FR); Ecole Nationale Superieure De Chimie Montpellier (ENSC), 34000 Montpellier (FR)
(72) Inventeur: IBERT, Mathias, F-59930 La Chapelle d'Armentieres (FR); BUFFE, Clothilde, F-59160 Lomme (FR); SAINT-LOUP, René, F-59160 Lomme (FR); FERTIER, Laurent, F-86000 Poitiers (FR); GIANI, Olivia, F-34920 Le Crès (FR); ROBIN, Jean-Jacques, F-34830 Clapiers (FR); JOLY-DUHAMEL, Christine, F-34150 Gignac (FR)
(74) Mandataire: Plasseraud IP
(86) Numéro de dépôt international: PCT/FR2014/050633
(87) Numéro de publication internationale: WO 2014/147340

(56) Documents cités:
- WO-A1-2011/048739
- WO-A1-2011/048750
- GB-A- 586 141
- US-A1- 2012 092 426

## Description

### DOMAINE TECHNIQUE DE L'INVENTION

La présente invention concerne des compositions réticulables permettant de former des revêtements sur différents types de substrats. La présente invention concerne en particulier des compositions comprenant des monomères à base de dianhydrohexitol fonctionnalisés par des (méth)acrylates, leurs utilisations et les revêtements polymères obtenus à partir de ces compositions.

### ART ANTERIEUR

De nombreuses industries ont besoin de compositions permettant de former des revêtements sur des substrats. Il peut s'agir par exemple de revêtements protecteurs, décoratifs, ou de traitement de surface. Il existe déjà un grand nombre de compositions réticulables pour cet usage dans la littérature et dans le commerce. Ces compositions consistent pour la plupart en un mélange de monomères polymérisables fabriqués par l'industrie chimique à partir de dérivés du pétrole.

Cependant, dans le contexte actuel de la diminution progressive des ressources en produits pétroliers, il est de plus en plus intéressant de remplacer les produits d'origine pétrolière par des produits d'origine naturelle.

L'utilisation de polymères biosourcés, c'est-à-dire réalisés à partir de matières premières d'origine naturelle, a déjà été décrite. En particulier, la publication de L. Jasinska et de C. E. Koning (« Unsaturated, biobased polyesters and their cross-linking via radical copolymerization », Journal of Polymer Science Part A: Polymer Chemistry, Volume 48, Issue 13, pages 2885-2895, 1 Juillet 2010) décrit la préparation de polyesters insaturés ayant des températures de transition vitreuse (Tg) relativement élevées, i.e. supérieures à 45°C, pour des applications comme revêtement. Ces polyesters insaturés sont obtenus par polymérisation d'isosorbide avec de l'anhydride maléique et optionnellement de l'acide succinique. Pour pouvoir être utilisés en tant que revêtement, ces polyesters insaturés doivent cependant être réticulés. Les polymères peuvent soit être mis en solution ou en suspension avec un agent réticulant, puis appliqués sur le substrat, et enfin réticulés après évaporation du solvant, soit déposés par des techniques usuelles de type « powder coating » soit fondus pour être déposés. Dans tous les cas, ces techniques de dépôt nécessitent une étape de post-réticulation. Le fait que la réalisation du revêtement nécessite plusieurs étapes successives est contraignant.

Un des objectifs de la présente invention est de proposer une composition réticulable permettant de fabriquer des revêtements de manière plus facile, de préférence sans étape de séchage ou de fusion, tout en employant des méthodes de dépôt simples sans nécessité de fondre le produit.

La demande de brevet WO 2011/048739 décrit des compositions comprenant des composés (méth)acrylates cycliques ayant une formule générale spécifique, lesdits composés pouvant être obtenus à partir d'isosorbide. Ces composés constituent des monomères susceptibles de polymériser entre eux par voie radicalaire. On parle alors d'homopolymérisation. L'avantage d'employer de tels dérivés (méth)acryliques est de permettre une réticulation rapide, par voie thermique ou photochimique. Cependant les revêtements obtenus à partir de ces compositions par homopolymérisation présentent une résistance au choc assez faible et sont très cassants comme démontré ci-après. Ce document WO 2011/048739 vise également et plus particulièrement des compositions à base de dérivés (méth)acrylates d'isosorbide et de dérivés (méth)acrylates de polyuréthane. Or, l'emploi de polymères porteurs de fonctions de type uréthane peut se révéler problématique en raison de l'instabilité thermique de la liaison uréthane (thermiquement réversible à des températures de l'ordre de 180-200°C), du dégagement de produits toxiques en cas de feu et de la toxicité des réactifs diisocyanates employés. De plus, il apparaît de la demande WO 2011/048739 que l'ajout de polymères tels que les polyuréthanes porteurs de fonctions (méth)acrylates dans des compositions (méth)acrylates d'isosorbide diminue la résistance à l'abrasion du polymère obtenu à partir de cette composition.

Il serait avantageux de disposer de nouvelles compositions réticulables permettant de fabriquer des revêtements de manière simple et efficace, et permettant également d'obtenir des revêtements de qualité au moins équivalente, voire supérieure, par rapport aux revêtements obtenus avec les compositions déjà connues et notamment obtenus à partir de dérivés pétrochimiques.

C'est pour répondre à cette attente que les inventeurs ont recherché de nouvelles compositions réticulables. Ils ont découvert que l'association de composés de dérivés (méth)acrylés de dianhydrohexitols avec au moins un monomère possédant des fonctions insaturées réactives permettait de fabriquer des revêtements ne présentant pas les inconvénients de l'art antérieur.

### RESUME DE L'INVENTION

L'invention a ainsi pour objet une composition comprenant :
- un monomère (A) dérivé de 1,4:3,6-dianhydrohexitol porteur d'au moins une fonction acrylate ou méthacrylate; et
- un monomère oligomèrique fonctionnalisé (B) tel que défini dans la revendication 1.

Un objet plus particulier de l'invention porte sur un procédé de fabrication d'un revêtement polymère sur un substrat, ainsi que le revêtement susceptible d'être obtenu par ledit procédé.

### DESCRIPTION DETAILLEE

Les 1,4:3,6-dianhydrohexitols, également appelés dianhydrohexitols ou isohexides, sont des produits bien connus, généralement obtenus par déshydratation des hexitols, c'est à dire par déshydration des sucres hydrogénés en C6 tels que le sorbitol, le mannitol et l'iditol. Les 1,4:3,6-dianhydrohexitols existent essentiellement sous la forme de trois isomères, l'isosorbide, l'isomannide et l'isoidide, selon la configuration des deux fonctions hydroxy.

Dans la présente demande, le terme « 1,4:3,6-dianhydrohexitols » désigne l'isosorbide, l'isomannide, l'isoidide et les mélanges d'au moins deux de ces produits. Toutefois, dans la présente invention, les 1,4:3,6-dianhydrohexitols peuvent avantageusement être l'isosorbide.

La composition selon l'invention comprend donc un monomère (A) dérivé de 1,4:3,6-dianhydrohexitol porteur d'au moins une fonction acrylate ou méthacrylate.

Il peut s'agir, plus préférentiellement, d'un monomère (A) dérivé de 1,4:3,6-dianhydrohexitol porteur de deux fonctions acrylate et/ou méthacrylate.

Il peut également s'agir d'un mélange de composés (A) porteurs d'une fonction acrylate ou méthacrylate et de composés (A) porteurs de deux fonctions acrylate et/ou méthacrylate.

Le monomère (A1) peut être, de préférence, choisi parmi le diacrylate d'isosorbide (A1), le diméthacrylate d'isosorbide (A2) ou un mélange de diacrylate d'isosorbide et de diméthacrylate d'isosorbide. Ces composés peuvent être représentés comme ci-après.

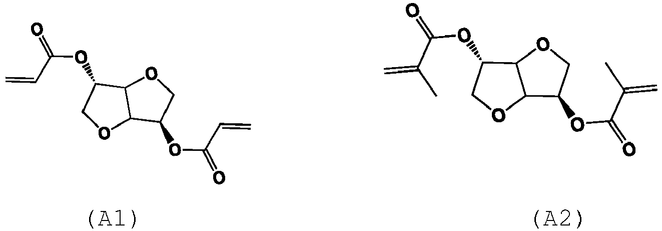

L'introduction de fonctions acrylate et/ou méthacrylate sur le 1,4:3,6-dianhydrohexitol peut être réalisée selon le protocole décrit dans les documents US 2012/092426 ou US 2009/0018300.

La composition selon l'invention comprend également un monomère oligomèrique fonctionnalisé (B).

Ce monomère oligomèrique fonctionnalisé (B) est, porteur de deux fonctions acrylate et/ou méthacrylate et répond à la formule générale suivante:

R₁-X_{C}-R₂

dans laquelle
R₁ et R₂ sont identiques ou différents et sont choisis parmi le groupe acrylate et le groupe méthacrylate,
X_{C} représente une chaîne linéaire acyclique longue d'au moins 6 atomes de carbone, de préférence d'au moins 10 atomes de carbone et plus préférentiellement d'au moins 20 atomes de carbone, la dite chaîne étant de préférence choisie parmi :
   - une chaîne de type polyéther, notamment polyéthylène glycol (PEG), polypropylène glycol (PPG), et polytétraméthylène glycol(PTMG);
   - une chaîne de type polyester aliphatique ou semi-aliphatique de faible température de transition vitreuse (comme par exemple la poly ε-caprolactone ou la poly butyrolactone).

Par faible température de transition vitreuse, on entend généralement une température de transition vitreuse inférieure à 20°C, avantageusement inférieure à -20°C et préférentiellement inférieure à -35°C.

L'introduction de ce type de monomère (B) dans la composition selon l'invention est avantageuse car elle permet de moduler la distance entre les nœuds de réticulation de la chaîne et ainsi d'adapter les propriétés du réseau réticulé aux besoins.

Le monomère (B) est de préférence un dérivé acrylate ou méthacrylate de polyéther (PEG/ PPG ou PTMG) ou de polyester aliphatique (poly ε-caprolactone par exemple).

Le monomère (B) présente une masse molaire allant de 350 à 5000 g.mol⁻¹, préférentiellement de 350 à 2000g.mol⁻¹, tout préférentiellement de 400 à 1000 g.mol⁻¹.

A titre d'exemple, le monomère (B) peut être choisi dans le groupe constitué du diacrylate de poly(tétraméthylène glycol)650 (DAPTMEG), du diméthacrylate de poly(tétraméthylèneglycol)650 (DMAPTMEG), du diacrylate de poly(ε-caprolactone)530 diol (DACAP), du diacrylate de poly(éthylèneglycol)600 (DAPEG), du diacrylate de poly(propylèneglycol)700 (DAPPG), du diméthacrylate de poly(éthylène glycol)600 (DMAPEG), du diméthacrylate de poly(propylène glycol)400 (DMAPPG).

La composition selon l'invention peut renfermer, outre le monomère (A), un mélange des monomères (B) tels que décrits précédemment.

La composition selon l'invention comprend de 20 à 80% en moles de monomère (A), par exemple de 40 à 70% de (A), et préférentiellement de 50 à 67% par rapport au nombre de moles de (A) et (B).

Plus la proportion en mole de (A) est grande, plus la composition obtenue est riche en matière biosourcée, ce qui présente un avantage par rapport aux compositions actuellement existantes à base de dérivés pétroliers.

De plus, les polymères et les revêtements de ces polymères obtenus à partir des compositions selon l'invention présentent une bonne stabilité thermique, un bon comportement au choc, en particulier à froid, une bonne résistance à la déformation et une bonne résistance à l'usure, ceci particulièrement lorsque la composition présente les quantités (A) et (B) préférées ci-dessus.

La composition selon l'invention peut en outre comprendre un monomère (C), différent des monomères (A) et (B), copolymérisable avec ces derniers.

Ce monomère(C), monomère susceptible de réagir avec les monomères (A) et (B) comprend préférentiellement au moins une fonction promotrice d'adhésion. Dans le dernier cas, on peut parler pour le monomère (C) de promoteur d'adhésion.

Une fonction promotrice d'adhésion est une fonction chimique susceptible d'établir des liaisons chimiques ou physiques fortes ou faibles avec la surface d'un substrat.

De préférence, la fonction promotrice d'adhésion peut être choisie parmi la fonction acide carboxylique, notamment les fonctions acrylique ou méthacrylique, les fonctions comprenant au moins un atome de phosphore sous forme acide ou ester, les fonctions éthoxy- ou méthoxysilane ou les fonctions silanol.

Ce monomère (C) peut être l'acide acrylique, l'acide méthacrylique, les composés insaturés dérivés d'acide phosphorique et d'ester d'acide phosphorique, les composés insaturés dérivés d'acide phosphonique et d'ester d'acide phosphonique, les composés insaturés alcoxysilanes, les composés insaturés porteurs de la fonction silanol.

Le monomère (C) peut représenter de 0 à 15 %, préférentiellement de 3 à 12 %, et encore plus préférentiellement de 5 à 10 % en poids de la composition selon l'invention.

La composition selon l'invention peut comprendre, en outre, un amorceur de polymérisation.

Dans la présente invention, le terme « amorceur de polymérisation » désigne tout agent chimique capable de déclencher la réaction de polymérisation des monomères présents dans la composition.

Préférentiellement, l'amorceur est un amorceur radicalaire. Cet amorceur peut être un photoamorceur ou un amorceur thermique. L'amorceur est de préférence un photoamorceur.

Les amorceurs thermiques préférés pour la présente invention peuvent être choisis dans le groupe constitué par les peroxydes organiques, tels que le benzoyl peroxyde, le méthyl-cyclo-hexanone peroxyde, le cumènehydroperoxyde, le diisopropylbenzène peroxyde, le di-t-butyl peroxyde, le peroxybenzoate de t-butyle, le peroxycarbonate de diisopropyle et le monocarbonate de t-butylperoxyisopropyle, et par les composés azoïque, tels que le 2,2'-azobis-isobutyronitrile (AIBN).

Les photoamorceurs préférés pour la présente invention peuvent être choisis dans le groupe constitué par les cétones aromatiques, tels que la benzophénone, les composés aromatiques, tels que l'anthracène, l'a-chlorométhylnaphtalène et le diphénylsulfide, et les composés soufrés, tels que le thiocarbamate. En particulier, le photoamorceur peut être choisi parmi les photoamorceurs activés par irradiation UV, par exemple ceux du groupe constitué par :l'acétophénone, l'acétophénone benzylcétal, la 1-hydroxycyclohexylphénylcétone, la 2,2-diméthoxy-1,2-diphényléthane-1-one, la xanthone, la fluorènone, le benzaldéhyde fluorène, l'anthraquinone, la triphénylamine, le carbazole, la 3-méthyl-acétophénone, la 4-chloro-benzophénone, la 4,4'-méthoxy-benzophénone, la 4,4'-diamino-benzophénone, le benzoinpropyléther, le benzoinéthyl éther, la benzyl méthyl cétal 1-(4-isopropylphényl)-2-hydroxy-2-méthyl-propane-1-one, la 2-hydroxy-2-méthyl-1-phénylpropan-1-one, la thioxanthone, la diéthyl-thioxanthone, la 2-isopropyl-thioxanthone, la 2-chlorothioxanthone, la 2-méthyl-1-[4-(méthyl-thio)-phényl]-2-morpholinopropan-1-one, la 2-benzyl-2-diméthyl-amino-1-(4-morpholino-phényl)-butan-1,4-(2-hydroxyéthoxy)-phényl-(2-hydroxy-2-propyl) cétone, l'oxyde de 2,4,6-triméthylbenzoyl diphényl-phosphine, l'oxyde de bis-(2,6-méthoxybenzoyl)-2,4,4-triméthyl-pentyl phosphine, et l'oligo-(2-hydroxy-2-méthyl-1-(4-(1-méthylphényl)phényl)-propanone).

Des photoamorceurs de polymérisation disponibles dans le commerce sont, par exemple, les produits Irgacure® 184, 369, 651, 500, 819, 907, 784, 2959, CGI 1700, CGI 1750, CGI 1850 et CG24_61, Darocur® 1116 et 1173, et Lucirin® TPO de BASF, le produit Uvecryl® P36 d'UCB, et les produits Esacure® KIP 150, KIP 65LT, KIP 100F, KT37, KT55, KTO46 et KIP75/B de FratelliLamberti.

L'amorceur de polymérisation peut consister en un mélange de plusieurs amorceurs de polymérisation, par exemple en un mélange d'un amorceur thermique et d'un photoamorceur.

La quantité massique d'amorceur pourra être adaptée par l'homme du métier. Cette quantité massique peut aller de 0,01 à 20 %, préférentiellement de 0,5 à 5 % de la masse totale des monomères (A), (B), (C).

On peut également ajouter à la composition, notamment lorsque l'amorceur est un amorceur thermique, un ou plusieurs catalyseurs permettant d'augmenter la vitesse de l'amorceur ou encore de rendre efficace l'amorceur à plus basse température. Ces catalyseurs peuvent être de type amine.

La composition peut également comprendre au moins un agent d'étalement ayant pour fonction de permettre, avant réticulation, un bon étalement de la composition lorsqu'elle est appliquée sur le substrat. L'agent d'étalement peut être particulièrement utile pour la formation de revêtements, en particulier lorsque, comme le monomère (B), (C) est un monomère de type oligomèrique, c'est-à-dire comprenant plusieurs motifs répétitifs, car ces monomères oligomèriques peuvent rendre plus difficile l'application de la composition selon l'invention sur le substrat.

La composition peut également comprendre d'autres constituants non copolymérisables avec les monomères de la composition. Il peut s'agir par exemple d'inhibiteurs de polymérisation, de colorants ou de pigments, d'opacifiants ou d'additifs de protection thermique ou ultra-violet, des agents anti-statiques, des agents antibactériens, anti-salissures ou anti-fongiques. De préférence cependant, la composition selon l'invention comprend moins de 10%, plus préférentiellement moins de 2% en poids de ces autres constituants.

La composition selon l'invention peut être obtenue en mélangeant les monomères (A) et (B), ainsi que des éventuels monomères (C), et d'éventuels autres constituants non copolymérisables.

Comme indiqué précédemment, la composition selon l'invention peut comprendre des inhibiteurs de polymérisation.

Cette composition se présente avantageusement sous forme liquide à température ambiante. La viscosité de la composition peut aller jusqu'à 15000 Poises à 25°C.

La composition peut être utilisée pour la fabrication de polymères réticulés. Ces polymères réticulés peuvent être formulés pour des applications de tout type. Il peut s'agir par exemple de résines composites comprenant la composition selon l'invention et des renforts (charge ou fibres).

En particulier, cette composition peut avantageusement être utilisée pour la fabrication de revêtements sur des substrats. Par « revêtement », on entend dans la présente invention tout type de couche de faible épaisseur appliquée sur un substrat, quelle que soit la fonction de cette couche. Il peut s'agir par exemple de revêtements protecteurs, décoratifs, ou de traitement de surface. Les films, les vernis et les peintures font partie des revêtements au sens de la présente invention.

Le substrat sur lequel est appliqué le revêtement dans la présente invention peut être de toute sorte. Il peut s'agir un particulier de substrats en bois, en métal, en plastique, en verre ou en papier. De préférence, le support est en métal, par exemple en acier.

L'invention a également pour objet un procédé de fabrication d'un revêtement polymère sur un substrat comprenant les étapes suivantes :
- le dépôt sur le substrat d'une couche de la composition selon l'invention telle que décrite ci-avant, puis
- la réticulation de la composition.

Le dépôt de la composition peut être réalisé selon tout moyen connu de l'homme du métier, par exemple par trempage, par enduction centrifuge, par « barcoater », par « tape casting » ou par pulvérisation. L'épaisseur de la couche déposée est ajustée en fonction de l'épaisseur du revêtement que l'on souhaite obtenir. L'épaisseur de la couche déposée peut par exemple être comprise entre 100 nm et 2 mm. De préférence, la couche a une épaisseur uniforme, de manière à obtenir un revêtement final uniforme.

La réticulation de la composition se fait par activation de l'amorceur de polymérisation. Cette activation varie en fonction du type d'amorceur contenu dans la composition. La durée et les conditions de l'étape d'activation de l'amorceur de polymérisation dépendent essentiellement de la nature et de la concentration des monomères et de l'amorceur dans la composition, et l'homme du métier saura adapter ces paramètres selon le cas.

Selon un mode de réalisation préféré, l'amorceur de polymérisation est un photoamorceur, et l'activation de ce photoamorceur est obtenue en exposant la couche de composition déposée sur le substrat à une irradiation, en particulier à une irradiation UV. De préférence, l'irradiation est effectuée de façon égale sur l'ensemble de la couche de composition déposée sur le substrat.

L'activation de l'amorceur de polymérisation permet de déclencher la réaction de polymérisation des monomères (A) et (B) entre eux, ainsi qu'avec d'autres monomères réactifs éventuellement présents, en particulier les éventuels monomères (C), décrits précédemment.

L'amorceur peut être déjà présent dans la composition ou ajouté juste avant le dépôt de la composition sur la surface à revêtir.

L'amorceur est de préférence ajouté juste avant le dépôt de la composition sur la surface à revêtir.

Des étapes additionnelles sont possibles comme un recuit du revêtement ou un flammage du support avant application de la composition, mais ces étapes ne sont pas obligatoires pour réaliser le procédé selon l'invention.

Ce procédé permet d'obtenir un revêtement polymère présentant des propriétés intéressantes. En particulier, les revêtements obtenus peuvent présenter au moins une des propriétés suivantes :
- une bonne transparence ;
- un indice de réfraction faible ;
- une brillance élevée ;
- une bonne adhésion au substrat ;
- une dureté élevée ;
- une bonne résistance à l'abrasion ou à l'usure ;
- une bonne résistance chimique, aux solvants par exemple à l'eau ou bonne tenue à l'eau, mais aussi aux bases et aux acides ;
- une bonne tenue à l'impact/au choc ;
- ainsi qu'une bonne résistance à la déformation.

Ainsi, les revêtements obtenus qui sont également des objets de la présente invention possèdent des propriétés au moins aussi bonnes, si ce n'est meilleures que des revêtements actuellement disponibles, mais ils présentent l'avantage d'être obtenus aisément à partir de matériaux biosourcés.

L'invention sera mieux comprise à la lumière des exemples non limitatifs et purement illustratifs suivants.

### EXEMPLES

### Monomères (A)

### 1 Synthèse du diacrylate d'isosorbide

Le diacrylate d'isosorbide est obtenu à partir d'isosorbide selon le protocole suivant.
Ainsi, on introduit dans un réacteur d'une capacité de 250 mL, refroidi à 0°C par un bain de glace salée, muni d'un système d'agitation à barreau aimanté, 3 g d'isosorbide (0,21 mol) dissous dans du dichlorométhane (120 mL) puis 8,3 g de triéthylamine (4 équivalents molaires par rapport à l'isosorbide) et 7,4 g de chlorure d'acryloyle dilués dans du dichlorométhane (30 mL), ajouté goutte à goutte. On agite le mélange pendant 24 heures à température ambiante. On suit l'avancement de la réaction par Résonnance Magnétique Nucléaire du Proton (RMN ¹H) dans le Chloroforme deutéré (CDCl₃). On lave le milieu réactionnel trois fois avec de grands volumes d'eau salée. On sèche la phase organique avec du sulfate de magnésium anhydre et on évapore le solvant sous pression réduite. On purifie le brut par chromatographie sur gel de silice (éluant : dichlorométhane). On obtient 4,14 g de solide jaune (rendement : 79%).

### 2 Synthèse du diméthacrylate d'isosorbide

Le diméthacrylate d'isosorbide est obtenu à partir d'isosorbide selon le protocole suivant
Ainsi, on introduit dans un réacteur d'une capacité de 250 mL, refroidi à 0°C par un bain de glace salée, muni d'un système d'agitation à barreau aimanté, 2 g d'isosorbide (0,14 mol) dissous dans du dichlorométhane (80 mL) puis 5,5 g de triéthylamine (4 équivalents molaires par rapport à l'isosorbide) et 5,7 g de chlorure de méthacryloyle dilués dans du dichlorométhane (20 mL), ajouté goutte à goutte. On agite le mélange pendant 24 heures à température ambiante. On suit l'avancement de la réaction par Résonnance Magnétique Nucléaire du Proton (RMN ¹H) dans le Chloroforme deutéré (CDCl₃). On lave le milieu réactionnel trois fois avec de grands volumes d'eau salée. On sèche la phase organique avec du sulfate de magnésium anhydre et on évapore le solvant sous pression réduite. On purifie le brut par chromatographie sur gel de silice (éluant : dichlorométhane). On obtient 3,7 g de solide jaune (rendement : 95%).

### Co-monomères (dont Monomères (B))

### Produits commerciaux :

Tous les produits listés ci-après ont été achetés chez Sigma-Aldrich et ont été employés tels quels sans purification supplémentaire.
- le diacrylate de diéthylène glycol (DADEG)
- le diacrylate de poly(éthylèneglycol)600 (DAPEG)
- le diacrylate de poly(propylèneglycol)700 (DAPPG),
- le diméthacrylate de poly(éthylène glycol)600 (DMAPEG),
- le diméthacrylate de poly(propylène glycol)400 (DMAPPG).

### Monomères oligomèriques (B) synthétisés :

### 1. Synthèse du diacrylate de poly(ε-caprolactone) diol(DACAP)

La synthèse du DACAP a été réalisée via l'estérification de l'acide acrylique activé : chlorure d'acryloyle et du poly(ε-caprolactone) diol (MW 530) en présence de triéthylamine avec un rendement de 78%.

15 g de poly(ε-caprolactone)diol sont dilués dans 120 mL de dichlorométhane. Le milieu est refroidi à 0°C et la triéthylamine (8,7 mL ; 2,2 éq.) est additionnée. Après 5 minutes d'agitation, le chlorure d'acryloyle (9,2 mL ; 4 éq.) dilué dans 30 mL dichlorométhane est ajouté en goutte à goutte pendant 30 minutes. La réaction est laissée sous agitation pendant 24 heures à température ambiante. L'avancement de la réaction est contrôlé par RMN 1H (CDCl3). Le milieu réactionnel est lavé trois fois avec de grands volumes d'eau salée. La phase organique est séchée sur sulfate de magnésium anhydre et évaporée. Le brut obtenu est nettoyé sur charbon actif (éluant :dichlorométhane). Le produit est obtenu sous la forme d'une cire jaune (13,9 g ; rendement 78%).

### Caractérisations :

MS-ESI (masse exacte 670.36) M+1: 671.3635 Da. 1H NMR (CDCl3, 300.1 MHz): δ 1.24 (8H, m,H6); 1.47 (16H, m, H5/H7); 2.14 (8H, m, H4); 3.53 (4H, m; H1); 3.88-3.97 (8H, t, J = 6.6Hz, H8);4.05 - 4.13 (4H, m, H2); 5.66 (2H, dd, J = 1.5, 10.4Hz, H11); 5.95 (2H, dd, J = 10.4, 17.3 Hz,H10); 6.24 (2H, dd, J=1.5, 17.3 Hz, H11') ppm. 13C NMR (CDCl3, 75.5 MHz): δ 24.1 (C6); 25.1(C5); 27.9 (C7); 33.5 (C4); 62.8-63.8 (C8); 63.6 (C1); 68.6 (C2); 128.2 (C10); 130.0 (C11); 165.6(C9); 172.9 (C3) ppm.

### 2. Synthèse du di(méth)acrylate de poly(tétraméthylène glycol) (DAPTMEG et DMAPTMEG) :

La synthèse des dérivés DAPTMEG ou DMAPTMEG a été réalisée selon le même protocole utilisé lors de la synthèse de la DACAP en utilisant le poly(tétraméthylène glycol) (MW 650) et le chlorure d'acryloyle et le chlorure de méthacryloyle. Les monomères DAPTMEG et DMAPTMEG sont obtenus sous forme d'un liquide jaune avec un rendement de 82% et 91%, respectivement.

### Caractérisations :

DAPTMEG : MS-ESI (masse exacte 774.55) M+1: 775.5580 Da. 1H NMR (CDCl3, 300.1 MHz): δ1.61-1.74 (36H, m, H1), 3.40 (32H, m, H2); 4.17 (4H, t, J = 6.4 Hz, H2'); 5.82 (2H, dd, J = 1.5,10.4 Hz, H5); 6.11 (2H, dd, J = 10.4, 17.3 Hz, H4); 6.39 (2H, dd, J = 1.5, 17.3 Hz, H5') ppm. 13C NMR (CDCl3, 75.5 MHz): δ 25.5-26.5 (C1); 64.4-70.7 (C2); 128.6 (C4); 130.5 (C5); 166.3 (C3)ppm.

DMAPTMEG : MS-ESI (masse exacte 730.52) M+1: 731.5309 Da. 1H NMR (CDCl3, 300.1 MHz):δ 1.60-1.75 (41H, m, H1), 1.93 (6H, s, H6), 3.40 (36H, m, H2); 4.15 (4H, t, J = 6.4 Hz, H2'); 5.53 (2H, m, H5); 6.08 (2H, m, H4) ppm. 13C NMR (CDCl3, 75.5 MHz): δ 18.3 (C6), 25.5-26.5 (C1);64.5-70.6 (C2); 125.2 (C4); 136.4 (C5); 167.4 (C3) ppm.

### Monomères (C) ou promoteurs d'adhésion :

Sartomer® SR9054 : Acide Acrylique de chez Sartomer Europe.
**Amorceur** : Darocur® 1173(BASF)
**Agent d'étalement** : copolymère d'ester acrylique Perenol® F40 (BASF)

### A. Préparation de Compositions réticulables conformes (EX) ou non-conformes à l'invention (CP):

Différentes compositions ont été préparées en mélangeant les composés dans les proportions en grammes indiquées dans les tableaux suivants.

Ces mélanges, compositions ont ensuite été homogénéisés par agitation et bain ultra-son.

**Tableau I : Compositions à base d'acrylate pour l'homopolymérisation.**

| | **CP.1** | **CP.2** | **CP.3** | **CP.4** | **CP.5** | **CP.6** |
|---|---|---|---|---|---|---|
| **Monomère (A)** : | | | | | | |
| - diacrylate d'isosorbide | 10,0 | | | | | |
| - diméthacrylate d'isosorbide | | | | | | |
| **Co-monomère:** | | | | | | |
| - diacrylate de butanediol | | 10,0 | | | | |
| - diacrylate de diéthylène glycol | | | 10,0 | | | |
| - (B) diacrylate de poly(éthylène glycol) | | | | 10,0 | | |
| - (B) diacrylate de poly(caprolactone) | | | | | 10,0 | |
| - (B) diacrylate de poly(tétraméthylène glycol) | | | | | | 10,0 |
| - (B) diméthacrylate de poly(éthylène glycol) | | | | | | |
| - (B) diméthacrylate de poly (tétraméthylène glycol) | | | | | | |
| **Amorceur :** | | | | | | |
| BASF® Darocur 1173 | 0,26 | 0,34 | 0,30 | 0,10 | 0,10 | 0,09 |
| **Promoteur d'adhésion (C) :** | 1,0 | 1,0 | 1,0 | 1,0 | 1,0 | 1,0 |
| Sartomer® SR9054 | | | | | | |
| **Agent d'étalement :** | | | | | | |
| PERENOL® F40 | 1,0 | 1,0 | 1,0 | 1,0 | 1,0 | 1,0 |
| % molaire (A)/((A)+co-monomère) | 100 | 0 | 0 | 0 | 0 | 0 |

**Tableau II : Compositions à base d'acrylate pour la copolymérisation.**

| | **CP.7** | **CP.8** | **EX.1** | **EX.2** | **EX.3** | **EX.4** | **EX.5** |
|---|---|---|---|---|---|---|---|
| **Monomère (A) :** | | | | | | | |
| - diacrylate d'isosorbide | 10,0 | 10,0 | 10,0 | 10,0 | 10,0 | 10,0 | 10,0 |
| - diméthacrylate d'isosorbide | | | | | | | |
| **Co-monomère:** | | | | | | | |
| - diacrylate de butanediol | 7,8 | | | | | | |
| - diacrylate de diéthylène glycol | | 8,4 | | | | | |
| - (B) diacrylate de poly(éthylène glycol) | | | 27,5 | 13,8 | 9,2 | | |
| - (B) diacrylate de poly(caprolactone) | | | | | | 25,2 | |
| - (B) diacrylate de poly(tétraméthylène glycol) | | | | | | | 29,7 |
| - (B) diméthacrylate de poly(éthylène glycol) | | | | | | | |
| - (B) diméthacrylate de poly (tétraméthylène glycol) | | | | | | | |
| **Amorceur :** | | | | | | | |
| BASF® Darocur 1173 | 0,52 | 0,52 | 0,52 | 0,40 | 0,34 | 0,52 | 0,52 |
| **Promoteur d'adhésion (C):** | 1,8 | 1,8 | 3,8 | 2,4 | 1,9 | 3,5 | 4,0 |
| Sartomer® SR9054 | | | | | | | |
| **Agent d'étalement :** | | | | | | | |
| PERENOL® F40 | 1,8 | 1,8 | 3,8 | 2,4 | 1,9 | 3,5 | 4,0 |
| % molaire (A)/((A)+co-monomère) | 50 | 50 | 50 | 66 | 75 | 50 | 50 |

**Tableau III : Compositions à base de méthacrylate pour l'homo- et copolymérisation.**

| | **CP.9** | **CP.10** | **CP.11** | **EX.6** | **EX.7** | **EX.8** | **EX.9** |
|---|---|---|---|---|---|---|---|
| **Monomère (A) :** | | | | | | | |
| - diacrylate d'isosorbide | | | | | | | |
| - diméthacrylate d'isosorbide | 10,0 | | | 10,0 | 10,0 | 10,0 | 10,0 |
| **Co-monomère:** | | | | | | | |
| - diacrylate de butanediol | | | | | | | |
| - diacrylate de diéthylène glycol | | | | | | | |
| - (B) diacrylate de poly(éthylène glycol) | | | | | | | |
| - (B) diacrylate de poly(caprolactone) | | | | | | | |
| - (B) diacrylate de poly(tétraméthylène glycol) | | | | | | | |
| - (B) diméthacrylate de poly(éthylène glycol) | | 10,0 | | 26,6 | 13,3 | 8,9 | |
| - (B) diméthacrylate de poly (tétraméthylène glycol) | | | 10,0 | | | | 27,3 |
| **Amorceur :** | | | | | | | |
| BASF® Darocur 1173 | 0,48 | 0,16 | 0,16 | 0,46 | 0,34 | 0,30 | 0,46 |
| **Promoteur d'adhésion (C) :** | 1,0 | 1,0 | 1,0 | 3, 7 | 2,3 | 1,9 | 3,7 |
| Sartomer® SR9054 | | | | | | | |
| **Agent d'étalement :** | | | | | | | |
| PERENOL® F40 | 1,0 | 1,0 | 1,0 | 3,7 | 2,3 | 1,9 | 3,7 |
| % molaire (A)/((A)+co-monomère) : | 100 | 0 | 0 | 50 | 66 | 75 | 50 |

### B. Réalisation des revêtements sur un support acier

Une fine couche de composition réticulable telle que décrite ci-dessus a été déposée sur des supports en acier (lame Q-Lab de type Q-panel acier laminé 76x152 mm) à l'aide d'un bar-coater Sheen Instruments 1133N, équipé d'une barre de 150 µm afin de recouvrir toute la surface du support avec le minimum de composition.

Les supports ainsi recouverts ont ensuite été déposés sur le tapis roulant d'un banc UV (Fusion UV System, Inc®, modèle LC6E - Lampe à vapeur de mercure de type H (FUSION F300S)- 200nm-600nm - 120 W.cm⁻² - quelques secondes d'expositions) afin de procéder à la polymérisation ou réticulation.

Pour chacune des compositions, 5 passages à 15 cm/s sous la lampe UV ont été réalisés. Des revêtements d'une épaisseur de 150 µm ont ainsi été obtenus.

### C. Caractérisation/évaluation des propriétés des revêtements ainsi obtenus

**Le taux de conversion(TC)** exprimé en pourcentage (%) est déterminé par spectroscopie FT-IR après 2 minutes d'irradiation UV (240-450nm) à 350 mW.cm⁻².

**La température de transition vitreuse(Tg)** exprimée en degré Celsius (°C) a été mesurée par calorimétrie différentielle à balayage (2 passages de -100°C à 200°C, 15°C.min⁻¹).

**La température de dégradation à 10% de perte de masse** (**Td₁₀**) exprimée en dégrée Celsius (°C) a été mesurée par analyse thermogravimétrique (25°C à 600°C, 10°C.min⁻¹ sous air).

**Les taux de gonflement (en pourcentage %)** ont été calculés dans le tétrahydrofurane (**TG_{THF}**) (TG = (m_{abs}-mᵢ)/ mᵢ).

**Le taux d'insolubilité (en pourcentage %)** a été calculé dans le dichlorométhane (**TI_{DCM}**) (TI = m_{sec} / mᵢ).

**Les modules d'élasticité (E') et de perte (E)** exprimées en MPa ainsi que **le taux d'amortissement (tan δ)** ont été mesurées par analyse mécanique dynamique (ADM) à force imposée de -80°C à 30°C.

Certains échantillons étaient trop cassants et n'ont pas pu être évalués par ADM. Ils sont reportés avec la mention « C » dans les tableaux suivants.

De même, certaines propriétés n'ont pas été évaluées pour certains échantillons. La mention « NM » dans les tableaux suivants signifie « non mesuré(e) ».

**Tableau IV : Compositions à base de d'homopolymères acrylés.**

| **Compo** | **% mol. (A)** | **TC (%)** | **Tg (°C)** | **Td₁₀ (°C)** | **TG (%) (THF)** | **TG (%) (H₂O)** | **TI (%) (DCM)** | **E' (MPa)** | **E" (MPa)** | **tan δ** |
|---|---|---|---|---|---|---|---|---|---|---|
| **CP.1** | 100 | 82 | 36 | 328 | 9 ± 3 | | 97 ± 3 | C | C | C |
| **CP.2** | 0 | 88 | - | 377 | 0 | 7 ± 2 | 100 ± 0,1 | C | C | C |
| **CP.3** | 0 | 95 | - | 353 | 0 | 2 ± 0,4 | 100 ± 0,5 | C | C | C |
| **CP.4** | 0 | 100 | -35 | 261 | 24 ± 0,3 | 56 ± 0,3 | 98 ± 0,1 | 16,4 | 0,8 | 0,05 |
| **CP.5** | 0 | 100 | -27 | 293 | 18 ± 1 | 0,4 ± 0,4 | 98 ± 0,8 | NM | NM | NM |
| **CP.6** | 0 | 100 | -58 | 215 | 17 ± 1 | 4 ± 1 | 99 ± 0,1 | NM | NM | NM |

**Tableau V : Compositions à base de copolymères acrylés.**

| **Compo** | **% mol. (A)** | **TC (%)** | **Tg (°C)** | **Td₁₀ (°C)** | **TG (%) (THF)** | **TG (%) (H₂O)** | **TI (%) (DCM)** | **E' (MPa)** | **E" (MPa)** | **tan δ** |
|---|---|---|---|---|---|---|---|---|---|---|
| **CP.7** | 50 | 91 | - | 354 | 0,4 ± 0,4 | 10 ± 0,6 | 100 ± 1 | C | C | C |
| **CP.8** | 50 | 92 | - | 336 | 0 | 15 ± 0 ,6 | 100 ± 0,7 | C | C | C |
| **EX.1** | 50 | 93 | -29 | 266 | 13 ± 1 | 33 ± 4 | 91 ± 0,1 | 31,1 | 1,4 | 0,05 |
| **EX.4** | 50 | 99 | -25 | 345 | 15 ± 1,4 | 3 ± 1 | 98 ± 0,4 | 123,4 | 24,2 | 0,20 |
| **EX.5** | 50 | 98 | -62 | 319 | 19 ± 1 | 3,3 ± 2,5 | 98 ± 0,4 | 60,0 | 6,8 | 0,11 |

**Tableau VI : Etude de plusieurs ratios à base de copolymères acrylés.**

| **Compo** | **% mol. (A)** | **TC (%)** | **Tg (°C)** | **Td₁₀ (°C)** | **TG (%) (THF)** | **TG (%) (H₂O)** | **TI (%) (DCM)** | **E' (MPa)** | **E" (MPa)** | **tan δ** |
|---|---|---|---|---|---|---|---|---|---|---|
| **CP.4** | 0 | 100 | -35 | 261 | 24 ± 0,3 | 56 ± 0,3 | 98 ± 0,1 | 16,4 | 0,8 | 0,05 |
| **EX.1** | 50 | 93 | -29 | 266 | 13 ± 1 | 33 ± 4 | 91 ± 0,1 | 31,1 | 1,4 | 0,05 |
| **EX.2** | 66 | 94 | -30 | 309 | 12 ± 0,6 | 27 ± 2,6 | 91 ± 2 | NM | NM | NM |
| **EX.3** | 75 | 86 | -34 | 317 | 7 ± 1 | 9,5 ± 1,5 | 98 ± 1 | 301 | 26,2 | 0,09 |
| **CP.1** | 100 | 82 | 36 | 328 | 9 ± 3 | 0 | 97 ± 3 | C | C | C |

**Tableau VII : Compositions à base de monomères méthacrylés.**

| **Compo** | **% mol. (A)** | **TC (%)** | **Tg (°C)** | **Td₁₀ (°C)** | **TG (%) (THF)** | **TG (%) (H₂O)** | **TI (%) (DCM)** | **E' (MPa)** | **E" (MPa)** | **tan δ** |
|---|---|---|---|---|---|---|---|---|---|---|
| **CP.9** | 100 | 60 | 42 | 266 | 0 | 5 ± 1 | 97 ± 3 | C | C | C |
| **CP.10** | 0 | 95 | -36 | 241 | 23 ± 1 | 51 ± 2 | 99 ± 0,1 | 17,6 | 0,4 | 0,02 |
| **CP.11** | 0 | 95 | -74 | 251 | 15 ± 1 | 2 ± 1 | 92 ± 2 | NM | NM | NM |
| **EX.6** | 50 | 83 | -42 | 253 | 9 ± 1 | 21 ± 1 | 99 ± 0,1 | 98,1 | 17,3 | 0,18 |
| **EX. 9** | 50 | 83 | -49 | 267 | 10 ± 1 | 3 ± 2 | 95 ± 2 | 626,4 | 69 | 0,11 |

**Tableau VIII : Etude de plusieurs ratios à base de copolymères méthacrylés.**

| **Compo.** | **% mol. (A)** | **TC (%)** | **Tg (°C)** | **Td₁₀ (°C)** | **TG (%) (THF)** | **TG (%) (H₂O)** | **TI (%) (DCM)** |
|---|---|---|---|---|---|---|---|
| **CP.10** | 0 | 95 | -36 | 241 | 23 ± 1 | 51 ± 2 | 99 ± 0,1 |
| **EX.6** | 50 | 83 | -42 | 253 | 9 ± 1 | 21 ± 1 | 99 ± 0,1 |
| **EX. 7** | 66 | 89 | -35 | 257 | 20 ± 6 | 33 ± 3 | 94 ± 3 |
| **EX.8** | 75 | 86 | -36 | 252 | 23 ± 1 | 27 ± 1 | 94 ± 1 |
| **CP.9** | 100 | 60 | 42 | 266 | 0 | 5 ± 1 | 97 ± 3 |

On remarque dans les Tableaux IV à VIII qui précèdent que la température de transition vitreuse des revêtements polymères selon l'invention est bien inférieure à la température ambiante, contrairement à celle des revêtements obtenus à partir des monomères de (méth)acrylate de 1,4:3,6-dianhydrohexitol (A). Elle est généralement similaire à celle du revêtement obtenu à partir du monomère (B).

Le revêtement selon l'invention présente donc l'avantage de ne pas être cassant à température ambiante, contrairement aux revêtements obtenus à partir de (méth)acrylates de 1,4:3,6-dianhydrohexitol.

L'adhésion au substrat de ces différents revêtements, leur résistance à la déformation, résistance au choc, résistance à l'abrasion et enfin leur indice de brillance ont aussi été évaluées.

Les **tests d'adhésion** sur une surface acier de type Q-panel ont été effectués selon la norme ASTM D3359-09 « Standard test methods for measuring adhésion by tape test ».

Les **tests de déformation et au choc** ont été effectués selon la norme ASTM D2794-10 « Standard test method for résistance of organic coatings to the effects of rapid deformation (impact) ».

Les **tests d'abrasion** ont été effectués selon la norme ASTM D4060-10 « Standard test method for abrasion of resistance of organic coatings by the Taber abraser ».

L'évaluation de la **brillance** des revêtements a été réalisée selon la norme internationale ASTM D523-08 : Standard Test Method for Specular Gloss.

**Tableau IX : Revêtements (épaisseur : 150µm) à base de di(méth)acrylés d'isosorbide, de di(méth)acrylate polyéthylène glycol et des diacrylates commerciaux.**

| **Compo** | **% mol. (A)** | **Adhésion** | **Résistance à la déformation** | **Résistance au choc** | **masse abrasée (meule H-18)** | **Indice de Brillance** |
|---|---|---|---|---|---|---|
| **CP.1** | 100 | 4 | < 10% | 60% | 46% | NM |
| **EX.1** | 50 | 4 | 50% | 100% | 23% | 30 |
| **EX.2** | 66 | 4 | 30% | 100% | 25% | NM |
| **EX.3** | 75 | 3 | 10% | 50% | 23% | NM |
| **CP.4** | 0 | 4 | 100% | 100% | 36% | NM |
| **CP.9** | 100 | 2 | < 10% | 50% | 28% | NM |
| **EX.6** | 50 | 2 | 40% | 100% | 14% | 19 |
| **CP.10** | 0 | 4 | 100% | 100% | 23% | NM |

**Tableau X : Revêtements (épaisseur : 20µm) à base de diacrylés d'isosorbide, de diacrylate polyéthylène glycol et des diacrylates commerciaux.**

| | | | | | | |
|---|---|---|---|---|---|---|
| Les conditions employées pour la fabrication des 5 revêtements réticulés décrits ci-après sont les mêmes que celles décrites précédemment, hormis que la barre utilisée pour le bar-coater est de 20 µm (même substrat, même intensité et temps irradiation) ; en revanche les revêtements obtenus ont une épaisseur de 20pm. | | | | | | |

| **Compo** | **% mol. (A)** | **Adhésion** | **Résistance à la déformation** | **Résistance au choc** | **masse abrasée (meule CS-17)** | **Indice de Brillance** |
|---|---|---|---|---|---|---|
| **CP.1** | 100 | 5 | < 10% | 100% | 34% | 74 |
| **EX.1** | 50 | 4 | 80% | 100% | 24% | 94 |
| **CP.4** | 0 | 5 | 100% | 100% | 84% | 95 |
| **EX.2** | 66 | 4 | 70% | 100% | 14% | NM |
| **EX.3** | 75 | 5 | 20% | 100% | 0% | NM |

On peut conclure des Tableaux IX à X que les revêtements obtenus ont une excellente adhésion au support, que les propriétés de résistance au choc sont excellentes.

On remarque également que les revêtements obtenus à partir de la composition selon l'invention (comprenant les monomères (A) et (B) présentent tous, de manière surprenante, une résistance à l'abrasion supérieure à celle des revêtements obtenus à partir du monomère (A) seul et également supérieure à celle des revêtements obtenus à partir du monomère (B).

Ceci est d'autant plus surprenant que les exemples du document WO 2011/048739 enseignent qu'un polymère obtenu à partir d'une composition comprenant, en plus du monomère (A) de 1:4,3:6-dianhydrohexitol, un monomère oligomèrique fonctionnalisé porteur de 2 fonctions (méth)acrylates, et notamment un polyuréthane, présente une résistance à l'abrasion détériorée par rapport à un polymère obtenu exclusivement à partir du monomère (A).

## Revendications

1. Composition comprenant :
- un monomère (A) dérivé de 1,4:3,6-dianhydrohexitol porteur d'au moins une fonction acrylate ou méthacrylate; et
- un monomère oligomèrique fonctionnalisé (B) présentant une masse molaire allant de 350 à 5000 g.mol⁻¹, porteur de deux fonctions acrylate et/ou méthacrylate et répondant à la formule suivante :
R1-Xc-R2
dans laquelle
R1 et R2 sont identiques ou différents et sont choisis parmi le groupe acrylate et le groupe méthacrylate,
Xc représente une chaîne linéaire acyclique longue d'au moins 6 atomes, la dite chaîne étant de type polyéther choisie dans le groupe constitué du polyéthylène glycol, du polypropylène glycol et du polytétraméthylène glycol, ou de type poly ε-caprolactone.

2. Composition selon la revendicationprécédente, dans laquelle le monomère (A) est choisi parmi le diacrylate d'isosorbide, le diméthacrylate d'isosorbide ou un mélange de diacrylate d'isosorbide et de diméthacrylate d'isosorbide.

3. Composition selon l'une quelconque des revendications précédentes, dans laquelle le monomère (B) présente une masse molaire allant de 350 à 2000g.mol⁻¹, tout préférentiellement de 400 à 1000 g.mol⁻¹.

4. Composition selon l'une quelconque des revendications précédentes, comprenant de 20 à 80% en moles de monomères (A) par rapport au nombre de moles de (A) et (B).

5. Composition selon l'une quelconque des revendications précédentes, comprenant de 40 à 70% de (A) par rapport au nombre de moles de (A) et (B).

6. Composition selon l'une quelconque des revendications précédentes, comprenant de 50 à 67% en moles de monomères (A) par rapport au nombre de moles de (A) et (B).

7. Composition selon l'une quelconque des revendications précédentes, comprenant en outre un amorceur de polymérisation, de préférence un photoamorceur.

8. Composition selon l'une quelconque des revendications précédentes, la composition comprenant en outre un monomère (C), différent des monomères (A) et (B), copolymérisable avec ces derniers, et comprenant au moins une fonction promotrice d'adhésion.

9. Composition selon la revendication 8, dans laquelle le monomère (C) est choisi parmi l'acide acrylique, l'acide méthacrylique, les composés insaturés dérivés d'acide phosphorique et d'ester d'acide phosphorique, les composés insaturés dérivés d'acide phosphonique et d'ester d'acide phosphonique, les composés insaturés alcoxysilanes, et les composés insaturés porteurs de la fonction silanol.

10. Procédé de fabrication d'un revêtement polymère sur un substrat comprenant les étapes suivantes :
- le dépôt sur le substrat d'une couche de la composition selon l'une quelconque des revendications précédentes, puis
- la réticulation de la composition.

11. Procédé selon la revendication précédente **caractérisé en ce que** le support est en métal, par exemple en acier.

12. Revêtement polymère sur un substrat susceptible d'être obtenu par le procédé tel que défini dans la revendication 10 ou 11.

## Patentansprüche

1. Zusammensetzung, umfassend:
- ein Monomer (A), welches von 1,4:3,6-Dianhydrohexitol abgeleitet ist, das mindestens eine Acrylat- oder Methacrylatfunktion trägt; und
- ein funktionalisiertes oligomeres Monomer (B) mit einem Molekulargewicht im Bereich von 350 bis 5000 g.mol⁻¹, das zwei Acrylat- und/oder Methacrylatfunktionen trägt und der folgenden Formel entspricht:
R1-Xc-R2
wobei
R1 und R2 identisch oder verschieden sind und aus der Acrylatgruppe und der Methacrylatgruppe gewählt sind,
Xc eine azyklische lineare Kette mit einer Länge von mindestens 6 Atomen darstellt, wobei die Kette vom Polyethertyp ist, gewählt aus der Gruppe bestehend aus Polyethylenglykol, Polypropylenglykol und Polytetramethylenglykol, oder vom Poly ε-caprolactontyp ist.

2. Zusammensetzung nach dem vorhergehenden Anspruch, wobei das Monomer (A) gewählt ist aus Isosorbiddiacrylat, Isosorbiddimethacrylat oder einer Mischung aus Isosorbiddiacrylat und Isosorbiddimethacrylat.

3. Zusammensetzung nach einem der vorhergehenden Ansprüche, wobei das Monomer (B) ein Molekulargewicht im Bereich von 350 bis 2000 g.mol⁻¹, vorzugsweise 400 bis 1000 g.mol⁻¹ aufweist.

4. Zusammensetzung nach einem der vorhergehenden Ansprüche, umfassend 20 bis 80 Mol-% Monomere (A), bezogen auf die Anzahl der Mole (A) und (B).

5. Zusammensetzung nach einem der vorhergehenden Ansprüche, umfassend 40 bis 70 % von (A), bezogen auf die Anzahl der Mole von (A) und (B).

6. Zusammensetzung nach einem der vorhergehenden Ansprüche, umfassend 50 bis 67 Mol-% Monomere (A), bezogen auf die Anzahl der Mole von (A) und (B).

7. Zusammensetzung nach einem der vorhergehenden Ansprüche, ferner umfassend einen Polymerisationsinitiator, vorzugsweise einen Photoinitiator.

8. Zusammensetzung nach einem der vorhergehenden Ansprüche, wobei die Zusammensetzung ferner ein Monomer (C) umfasst, das sich von den Monomeren (A) und (B) unterscheidet, mit diesen copolymerisierbar ist und mindestens eine kleberfördernde Funktion umfasst.

9. Zusammensetzung nach Anspruch 8, wobei Monomer (C) gewählt ist aus Acrylsäure, Methacrylsäure, ungesättigten Verbindungen, die von Phosphorsäure und Phosphorsäureester abgeleitet sind, ungesättigten Verbindungen, die von Phosphonsäure und Phosphonsäureester abgeleitet sind, ungesättigten Alkoxysilanverbindungen und ungesättigten Verbindungen, die die Silanolfunktion tragen.

10. Verfahren zur Herstellung einer Polymerbeschichtung auf einem Substrat, umfassend die folgenden Schritte:
- Ablagerung einer Schicht der Zusammensetzung gemäß einem der vorhergehenden Ansprüche auf dem Substrat, dann
- Vernetzen der Zusammensetzung.

11. Verfahren nach dem vorhergehenden Anspruch, **dadurch gekennzeichnet, dass** der Träger aus Metall, zum Beispiel Stahl, besteht.

12. Polymerbeschichtung auf einem Substrat, das durch das Verfahren nach den Ansprüchen 10 oder 11 erhalten werden kann.

## Claims

1. Composition comprising:
- a monomer (A) derived from 1,4:3,6-dianhydrohexitol bearing at least one acrylate or methacrylate function; and
- a functionalised oligomeric monomer (B) having a molar mass ranging from 350 to 5000 g.mol⁻¹, bearing two acrylate and/or methacrylate functions and complying with the following formula:
R1-Xc-R2
wherein
R1 and R2 are identical or different and are chosen from the acrylate group and the methacrylate group,
Xc represents a long acyclic linear chain of at least 6 atoms, said chain being of the polyether type chosen in the group consisting of polyethylene glycol, polypropylene glycol and polytetramethylene glycol, or of poly ε-caprolactone type.

2. Composition according to the preceding claim, wherein the monomer (A) is chosen from isosorbide diacrylate, isosorbide dimethacrylate or a mixture of isosorbide diacrylate and isosorbide dimethacrylate.

3. Composition according to any one of the preceding claims, wherein the monomer (B) has a molar mass ranging from 350 to 2000 g.mol⁻¹, particularly preferentially from 400 to 1000 g.mol⁻¹.

4. Composition according to any one of the preceding claims, comprising from 20 to 80% moles of monomers (A) with respect to the number of moles of (A) and (B).

5. Composition according to any one of the preceding claims, comprising from 40 to 70% (A) with respect to the number of moles of (A) and (B).

6. Composition according to any one of the preceding claims, comprising from 50 to 67% moles of monomers (A) with respect to the number of moles of (A) and (B).

7. Composition according to any one of the preceding claims, further comprising a polymerisation initiator, preferably a photoinitiator.

8. Composition according to any one of the preceding claims, the composition further comprising a monomer (C), different from the monomers (A) and (B), copolymerisable therewith, and comprising at least one adhesion promoter function.

9. Composition according to claim 8, wherein the monomer (C) is chosen from acrylic acid, methacrylic acid, unsaturated compounds derived from phosphoric acid and phosphoric acid ester, unsaturated compounds derived from phosphonic acid and phosphonic acid ester, unsaturated alkoxysilane compounds, and unsaturated compounds bearing the silanol function.

10. Method for manufacturing a polymer coating on a substrate comprising the following steps:
- depositing on the substrate a layer of the composition according to any one of the preceding claims, then
- cross-linking the composition.

11. Method according to the preceding claim **characterised in that** the substrate is made of metal, for example steel.

12. Polymer coating on a substrate suitable for being obtained by means of the method as defined in claim 10 or 11.
